# EUROPÄISCHE PATENTSCHRIFT

(11) **EP 3 658 783 B1**
(45) Veröffentlichungstag und Bekanntmachung des Hinweises auf die Patenterteilung: **17.02.2021**
(21) Anmeldenummer: 17797319.5
(22) Anmeldetag: 08.11.2017
(51) Int. Cl.: F15B 11/17, B29D 30/06, F15B 21/14, B30B 15/16, F15B 11/024

(54) **HYDRAULISCHES SYSTEM**
HYDRAULIC SYSTEM
SYSTÈME HYDRAULIQUE

(43) Veröffentlichungstag der Anmeldung: 03.06.2020
(73) Patentinhaber: Parker Hannifin Emea S.A.R.L., 1163 Etoy (CH)
(72) Erfinder: WAHLEFELD, Niels, 41462 Neuss (DE)
(74) Vertreter: Feucker, Max Martin
(86) Internationale Anmeldenummer: PCT/EP2017/078651
(87) Internationale Veröffentlichungsnummer: WO 2019/091553

(56) Entgegenhaltungen:
- EP-A1- 0 641 644
- EP-A2- 1 079 116
- US-A1- 2008 104 955

## Beschreibung

Die vorliegende Erfindung betrifft ein hydraulisches System, insbesondere eine Reifenpresse, umfassend eine Mehrzahl von hydraulischen Einheiten, die jeweils mindestens einen hydraulischen Verbraucher jeweils mit einem ersten Hydraulikanschluss und einem zweiten Hydraulikanschluss aufweisen, eine Versorgungsleitung, an die die hydraulischen Einheiten angeschlossen sind, und eine Zentraleinheit zur Bereitstellung und Druckbeaufschlagung des in der Versorgungsleitung geführten Hydraulikfluids.

Ein hydraulisches System mit den vorgenannten Merkmalen ist aus EP 1 079 116 A2 bekannt. Bei diesem System wird das druckbeaufschlagte Hydraulikfluid von der Zentraleinheit für jeden Verbraucher der hydraulischen Einheiten bereitgestellt, wobei das bei der Betätigung der hydraulischen Verbraucher verbrauchte und drucklose Hydraulikfluid über eine separate Rückführleitung zu der Zentraleinheit zurückgeführt wird. Da das gesamte Hydraulikfluidvolumen zur Betätigung der hydraulischen Verbraucher von der Zentraleinheit bereitgestellt werden muss, sind enorme Leitungsquerschnitte für die Versorgungsleitung und Rückführleitung erforderlich. Zudem muss das für die Betätigung der hydraulischen Einheiten erforderliche Volumen von den Hauptpumpen der Zentraleinheit gefördert werden. Da die hydraulischen Einheiten zeitlich versetzt und auch unregelmäßig betätigt werden, müssen die Hauptpumpen der Zentraleinheit an diese Dynamik angepasst sein. EP 1 079 116 A2 schlägt daher vor, dass die Zentraleinheit auch eine Druckspeichereinheit umfasst, sodass die Anforderungen an die Dynamik der Pumpen geringer sein können. Auch bei dieser Lösung müssen große Strömungsquerschnitte der Versorgungsleitung realisiert sein.

Darüber hinaus ist es bekannt, dass bei Reifenpressen mit mehreren hydraulischen Einheiten jede hydraulische Einheit unabhängig von den anderen hydraulischen Einheiten betrieben wird, wobei jede hydraulische Einheit einen eigenen Hydraulikfluidtank und eigene Pumpen zur Druckbeaufschlagung des Hydraulikfluids benötigt. Dies macht es aber auch erforderlich, dass Filter und Kühler zur Konditionierung des Hydraulikfluids in jeder hydraulischen Einheit vorgesehen sind, was den Wartungsaufwand wesentlich erhöht.

Aufgabe der vorliegenden Erfindung ist es daher die mit Bezug zum Stand der Technik geschilderten Nachteile zumindest teilweise zu beseitigen und insbesondere ein hydraulisches System mit einer Mehrzahl von hydraulischen Einheiten und einer Zentraleinheit anzugeben, bei dem der Aufwand für die Installation verringert ist, welches aber gleichzeitig einen geringen Wartungsaufwand erfordert.

Gelöst wird die Aufgabe durch ein hydraulisches System mit den Merkmalen des unabhängigen Anspruchs. Vorteilhafte Weiterbildungen des hydraulischen Systems sind in den abhängigen Ansprüchen und in der Beschreibung angegeben, wobei einzelne Merkmale der vorteilhaften Weiterbildungen in technisch sinnvoller Weise beliebig miteinander kombinierbar sind.

Gelöst wird die Aufgabe insbesondere durch ein hydraulisches System mit den eingangs genannten Merkmalen, bei dem die Versorgungsleitung als eine in und aus der Zentraleinheit führende Ringleitung ausgebildet ist, bei dem die hydraulischen Einheiten jeweils eine erste Leitung und eine zweite Leitung aufweisen, wobei die Ringleitung über die erste Leitung mit dem ersten Hydraulikanschluss des mindestens einen hydraulischen Verbrauchers der hydraulischen Einheit verbunden ist und über die zweite Leitung mit dem zweiten Hydraulikanschluss des mindestens einen hydraulischen Verbrauchers der hydraulischen Einheit verbunden ist, und bei dem die hydraulischen Einheiten jeweils eine antreibbare Hilfspumpe aufweisen, die in der zweiten Leitung der jeweiligen hydraulischen Einheit angeordnet ist.

Die Erfindung sieht in ihrem Grundgedanken also vor, dass anstatt einer die hydraulischen Verbraucher versorgenden Versorgungsleitung und einer zusätzlichen Rückführleitung nur eine Ringleitung vorgesehen ist, über die die hydraulischen Verbraucher der jeweiligen hydraulischen Einheit versorgt werden. Insofern muss über die Ringleitung nur das Differenzvolumen geführt werden, welches von den hydraulischen Verbrauchern einer hydraulischen Einheit benötigt beziehungsweise ausgegeben wird. Insofern kann die Ringleitung einen kleineren Strömungsquerschnitt aufweisen als die aus dem Stand der Technik bekannte Versorgungsleitung. Auf die Rückführleitung kann zudem komplett verzichtet werden. Damit überschüssiges Hydraulikfluid einer hydraulischen Einheit in die Ringleitung zurückgefördert werden kann, weist jede hydraulische Einheit eine antreibbare Hilfspumpe auf. Für die Installation eines solchen hydraulischen Systems sind also Rohrleitungen für die Ringleitung mit einem geringeren Materialbedarf erforderlich.

Das hydraulische System ist insbesondere eine Reifenpresse, wobei das hydraulische System mindestens zwei, bevorzugt mindestens fünf, besonders bevorzugt mindestens zehn hydraulische Einheiten aufweist. Insbesondere weist jede hydraulische Einheit mindestens einen, bevorzugt zwei, besonders bevorzugt mindestens fünf hydraulische Verbraucher auf. Die hydraulischen Verbraucher können beispielsweise als Zylinder-/Kolbeneinheit oder als Hydraulikmotor ausgebildet sein. Bei der Verwirklichung als Zylinder-/Kolbeneinheit ist der Kolben bevorzugt mit einer aus dem Zylinder herausführenden Stange verbunden. Es kann aber auch vorgesehen sein, dass der Kolben beidseitig mit jeweils einer aus dem Zylinder herausführenden Stange verbunden ist. Jeder hydraulische Verbraucher weist mindestens zwei Hydraulikanschlüsse auf.

Die Zentraleinheit weist insbesondere einen Hydraulikfluidtank für das Hydraulikfluid des hydraulischen Systems auf. Ferner weist die Zentraleinheit mindestens eine Hauptpumpe auf, mit der das Hydraulikfluid aus dem Hydraulikfluidtank in die Ringleitung gefördert wird, wobei die Hauptpumpe den zur Betätigung der hydraulischen Verbraucher benötigten Druck in Höhe von beispielsweise mindestens 80 bar, besonders bevorzugt von mindestens 95 bar bereitstellt. Die Zentraleinheit kann auch einen Druckspeicher aufweisen, mit dem das Hydraulikfluid eigenständig oder zusätzlich mit Druck beaufschlagt wird. Zudem weist die Zentraleinheit insbesondere Konditionierungseinrichtungen für das Hydraulikfluid wie Hydraulikfluidfilter und/oder Kühleinheit auf.

Als einzige hydraulische Verbunding zwischen der Zentraleinheit und den hydraulischen Einheiten ist die Ringleitung vorgesehen, die beidseits in die Zentraleinheit führt, wobei die Ringleitung innerhalb der Zentraleinheit mit ihren Enden bevorzugt zu dem Hydraulikfluidtank der Zentraleinheit geführt ist. Die Ringleitung wird insbesondere durch den Hydraulikfluidtank geschlossen, wobei innerhalb der Zentraleinheit weitere Elemente in der Ringleitung angeordnet sein können.

Die erste Leitung und die zweite Leitung der jeweiligen hydraulischen Einheiten sind entweder jeweils unmittelbar und direkt an die Ringleitung angeschlossen oder über eine weitere Leitung mittelbar und somit gemeinsam an die Ringleitung angeschlossen. Das von der Zentraleinheit über die Ringleitung bereitgestellte Hydraulikfluid liegt insbesondere unmittelbar, bevorzugt aber unter Zwischenschaltung von Ventilen über die erste Leitung an den ersten Hydraulikanschlüssen der hydraulischen Verbraucher an. In der ersten Leitung kann auch ein Ventil, beispielsweise ein schaltbares Absperrventil angeordnet sein, um zu verhindern, dass die Kolben der als hydraulische Verbraucher ausgebildeten Kolben-/Zylindereinheiten unter externer Last bei einem Druckausfall in der Ringleitung ungewollt einfahren. Sind mehrere hydraulische Verbraucher in einer hydraulischen Einheit vorgesehen, können einzelne Leitungen von der ersten Leitung zu den jeweiligen ersten Hydraulikanschlüssen der hydraulischen Verbraucher führen. Von den zweiten Hydraulikanschlüssen der hydraulischen Verbraucher können einzelne Leitungen zu einer dann als Sammelleitung aufzufassenden zweiten Leitung der hydraulischen Einheit führen. Zwischen den zweiten Hydraulikanschlüssen der hydraulischen Verbraucher und der Ringleitung ist dann die zumindest eine Hilfspumpe angeordnet. Es können aber auch mehrere Hilfspumpen für jede hydraulische Einheit vorgesehen sein. Gegebenenfalls kann auch eine Hilfspumpe für jeden hydraulischen Verbraucher einer hydraulischen Einheit vorgesehen sein.

Bevorzugt ist für jede hydraulische Einheit jeweils genau eine Verbindungsleitung vorgesehen, über die die jeweilige hydraulische Einheit an die Ringleitung angeschlossen ist, wobei die erste Leitung und die zweite Leitung über die eine Verbindungsleitung mit der Ringleitung verbunden sind. In der Verbindungsleitung kann insbesondere ein Absperrventil angeordnet sein, mit welchem das hydraulische System von der Ringleitung abgekoppelt werden kann. Durch die Ausbildung genau einer Verbindungsleitung für jede hydraulische Einheit kann erreicht werden, dass in jeder hydraulischen Einheit ein Kreislauf mit den hydraulischen Verbraucher ausgebildet wird, wobei zum einen über die Verbindungsleitung der für die Betätigung der hydraulischen Verbraucher benötigte Druck bereitgestellt wird und zum anderen über die Verbindungsleitung das für die Betätigung der hydraulischen Verbraucher benötigte Differenzvolumen bereitgestellt oder abgeführt wird.

Wenn der mindestens eine hydraulische Verbraucher beispielsweise einen Arbeitszylinder und einen in dem Arbeitszylinder angeordneten Arbeitskolben umfasst, der den Arbeitszylinder in einem Arbeitszylinderkolbenraum und einen Arbeitszylinderstangenraum teilt, wobei die erste Leitung mit dem Arbeitszylinderkolbenraum verbunden ist und die zweite Leitung mit dem Arbeitszylinderstangenraum verbunden ist, so wird bei einem Ausfahren der Kolbenstange ein größeres Fluidvolumen im Arbeitszylinderkolbenraum benötigt als aus dem Arbeitszylinderstangenraum verdrängt wird, sodass die Volumendifferenz über die Versorgungsleitung bereitgestellt wird. In diesem Fall kann ein mit der Hilfspumpe in der zweiten Leitung verbundener Motor als Generator betrieben werden, da das aus dem Arbeitszylinderstangenraum verdrängte Hydraulikvolumen einen höheren Druck aufweist, welcher durch die Pumpe zu der ersten Leitung hin entspannt wird. Ist hingegen die Kolbenstange in den Zylinder einzufahren, so fördert die Hilfspumpe Hydraulikfluid aus der Verbindungsleitung (oder aus der Ringleitung) in den Arbeitszylinderstangenraum, wobei das aus dem Arbeitszylinderkolbenraum verdrängte Differenzvolumen in die Ringleitung zurückgespeist wird.

Liegt hingegen an der Kolbenstange eine große extern drückende Last an, kann der an die Hilfspumpe angeschlossene Motor beim Ausfahren der Kolbenstange als Antrieb und beim Einfahren der Kolbenstange als Generator betrieben werden. Insbesondere in diesem Fall kann die erste Leitung mit dem Arbeitszylinderstangenraum verbunden sein und die zweite Leitung mit dem Arbeitszylinderkolbenraum verbunden sein.

Es kann hierbei insbesondere vorgesehen sein, dass in der zweiten Leitung zwischen der Ringleitung und der Hilfspumpe ein ansteuerbares Steuerventil angeordnet ist. Dieses ansteuerbare Steuerventil weist insbesondere eine in beide Richtungen offene Durchlaufstellung und eine Rückschlagstellung auf, in der verhindert wird, dass Hydraulikfluid aus der Ringleitung in Richtung der Hilfspumpe fließt. Befinden sich die hydraulischen Verbraucher im Stillstand, kann durch die Rückschlagstellung Leckage an der Hilfspumpe verhindert werden.

Bevorzugt weist jede hydraulische Einheit eine Mehrzahl (mindestens zwei) von hydraulischen Verbrauchern auf, wobei zwischen dem zweiten Hydraulikanschluss jedes Verbrauchers und der zweiten Leitung ein ansteuerbares Steuerventil angeordnet ist. Dieses Steuerventil weist bevorzugt eine in beide Richtungen wirkende Sperrstellung und eine in beide Richtungen offene Durchlaufstellung auf. Ein solches ansteuerbares Steuerventil kann aber auch vorgesehen sein, wenn nur ein hydraulischer Verbraucher pro hydraulischer Einheit vorgesehen ist. Über dieses ansteuerbare Steuerventil wird vorgegeben, welcher der hydraulischen Verbraucher betätigt werden kann. So können alle hydraulischen Verbraucher einer hydraulischen Einheit gleichzeitig in die gleiche Richtung betätigt werden. Es kann aber auch vorgesehen sein, dass die hydraulischen Verbraucher zeitlich versetzt zueinander betätigt werden. In diesem Fall fließt nur die Nettodifferenz des benötigten Hydraulikfluidvolumens aller hydraulischen Verbraucher durch die Verbindungsleitung, wobei die bevorzugt genau eine Hilfspumpe mit ihrem Motor in Abhängigkeit der Fließrichtung des Differenzvolumens durch die Verbindungsleitung als Antrieb oder Generator fungieren kann.

In einer bevorzugten Ausführungsform weist die Zentraleinheit neben dem einen Hydraulikfluidtank zwei Hauptpumpen zur Förderung und Druckbeaufschlagung des für die Betätigung der hydraulischen Verbraucher benötigten Hydraulikfluids auf, wobei die Hauptpumpen jeweils zwischen einem Ende der Ringleitung und dem Hydraulikfluidtank angeordnet sind. Da die Hauptpumpen der Zentraleinheit nur die Summe der Differenzvolumen aller hydraulischen Einheiten fördern müssen, können diese kleiner dimensioniert sein. Mit der Anordnung von zwei Pumpen an jeweils einem Ende der Ringleitung kann zudem erreicht werden, dass das Hydraulikfluid in beide Richtungen durch die Ringleitung gefördert werden kann. Wenn beispielsweise das benötigte Nettovolumen der hydraulischen Einheiten, welche näher an der ersten Hauptpumpe angeordnet sind mehr Hydraulikvolumen benötigen als die dem zweiten Ende näher angeordneten hydraulischen Einheiten, so würde die erste Hauptpumpe zur Förderung des Hydraulikfluids eingesetzt. Zudem kann eine Pumpe an einem Ende der Ringleitung jeweils als Generator benutzt werden. Zusätzlich zu den Hauptpumpen kann die Zentraleinheit eine Zirkulationsvorrichtung umfassen, mittels derer das Hydraulikfluid in der Ringleitung zirkulierbar ist. Aufgrund der nicht gleichzeitigen und gegebenenfalls unregelmäßigen und gegenläufigen Betätigung der verschiedenen hydraulischen Verbraucher kann es nämlich vorkommen, dass Hydraulikfluid in der Ringleitung beziehungsweise zwischen den hydraulischen Einheiten hin- und herfließt und somit nicht zurück in die Zentraleinheit gelangt. Mit der Zirkulationsvorrichtung kann hingegen sichergestellt werden, dass zusätzlich zu dem von den hydraulischen Einheiten benötigten Volumenstrom eine Zirkulation des in der Ringleitung befindlichen Hydraulikfluids stattfindet. Somit kann sichergestellt werden, dass das Hydraulikfluid regelmäßig den in der Zentraleinheit angeordneten Konditionierungsvorrichtungen zugeführt wird.

Es kann insbesondere vorgesehen sein, dass die Zirkulationsvorrichtung zwei insbesondere miteinander gekoppelte Zirkulationspumpen umfasst, wobei die eine Zirkulationspumpe vor dem ersten Ende der Ringleitung an die Ringleitung angeschlossen ist und die zweite Zirkulationspumpe vor dem zweiten Ende der Ringleitung an die Ringleitung angeschlossen ist. Die Zirkulationspumpen können im Sinne eines hydraulischen Transformators so miteinander gekoppelt sein, dass nur die für die Zirkulation notwendige Energie bereitgestellt werden muss, da die für die Förderung gegen den Druck in der Ringleitung benötigte Energie zurückgewonnen wird. Eine der Zirkulationspumpen würde also beim Entspannen des zirkulierenden Fluids Energie zurückgewinnen und damit die andere Zirkulationspumpe antreiben, so dass der insbesondere genau eine, der Zirkulationsvorrichtung zugeordnete elektrische Motor nur die Verluste ausgleichen muss.

Bevorzugt umfasst die Zentraleinheit eine Filtereinheit und/oder eine Kühleinheit, die der Zirkulationsvorrichtung für das mittels der Zirkulationsvorrichtung geförderte Hydraulikfluid zugeordnet sind. Insbesondere ist die Filtereinheit und/oder die Kühleinheit zwischen dem Hydraulikfluidtank und einer Pumpe der Zirkulationsvorrichtung angeordnet.

Die Pumpen des hydraulischen Systems sind jeweils mit einem elektrischen Motor gekoppelt, der als Antrieb und als Generator fungieren kann. Mit der Funktion als Generator kann in das hydraulische System eingeführte Energie zurückgewonnen werden.

Zur effizienten Energierückgewinnung kann auch unabhängig von der zuvor beschriebenen Lösung vorgesehen sein, dass das hydraulische System ein Stromversorgungsnetz umfasst, in dem ein zentraler Gleichrichter vorgesehen ist, mit dem Wechselstrom eines übergeordneten Netzes in Gleichstrom umwandelbar ist, und in dem jedem elektrischen Motor ein Wechselrichter zugeordnet ist, mit dem Gleichstrom in den von dem jeweiligen Motor benötigten Wechselstrom umwandelbar ist. In dieser Ausbildung wird auch eine eigenständige Erfindung in Zusammenhang mit dem eingangs genannten hydraulischen System gesehen. Mit der Ausbildung eines solchen Stromversorgungsnetzes braucht der zentrale Gleichrichter nur die elektrische Energie aus dem übergeordneten Netz wandeln, die das gesamte hydraulische System benötigt. Umgekehrt kann es in einigen Fällen aber auch vorkommen, dass mittels des zentralen Gleichrichters überschüssige elektrische Energie aus dem Gleichspannungsnetz in das übergeordnete Netz zurückgespeist werden kann. Somit kann die von einem elektrischen Motor zurückgewonnene Energie aber auch einem anderen elektrischen Motor zum Antrieb einer Pumpe zur Verfügung gestellt werden.

Das hydraulische System umfasst insbesondere auch eine übergeordnete Steuereinheit, die mit Sensoren, ansteuerbaren Steuerventilen, den Steuerungen der elektrischen Motoren und gegebenenfalls dem Gleichrichter und den Wechselrichtern verbunden ist. Die übergeordnete Steuereinheit kann somit auch beispielsweise in Abhängigkeit eines vorgegebenen Ablaufprogramms, die Elemente des hydraulischen Systems steuern und/oder regeln.

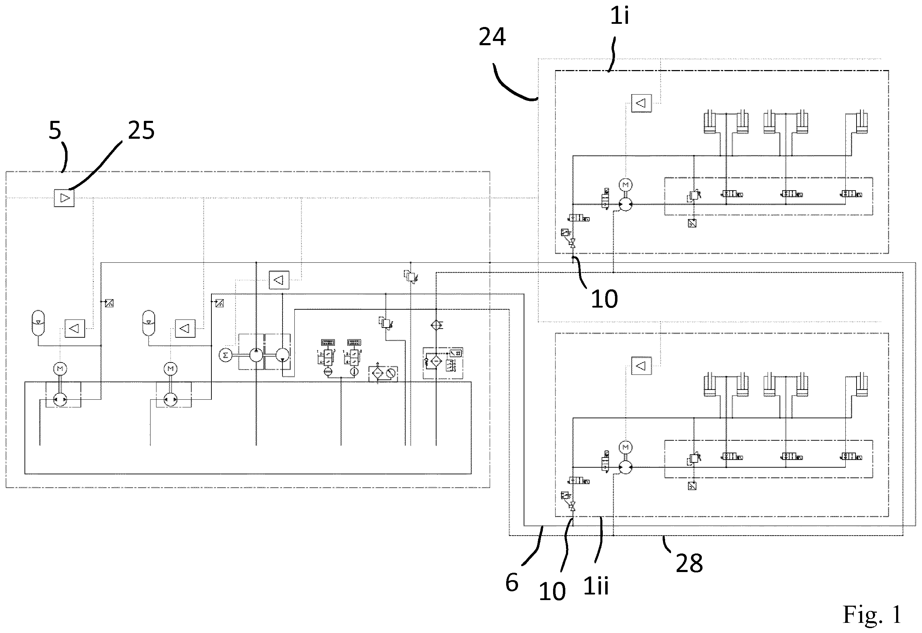

Die Erfindung sowie das technische Umfeld werden im Folgenden anhand der Figuren beispielhaft erläutert. Es zeigen schematische
- Figur 1:: ein hydraulisches System,
- Figur 2:: eine Zentraleinheit des hydraulischen Systems und
- Figur 3:: eine hydraulische Einheit des hydraulischen Systems.

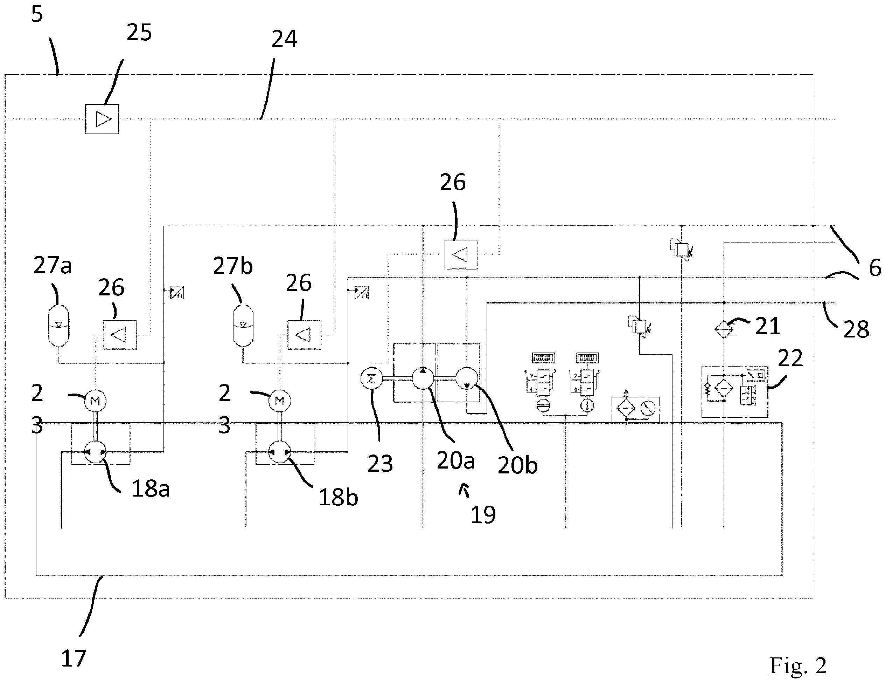

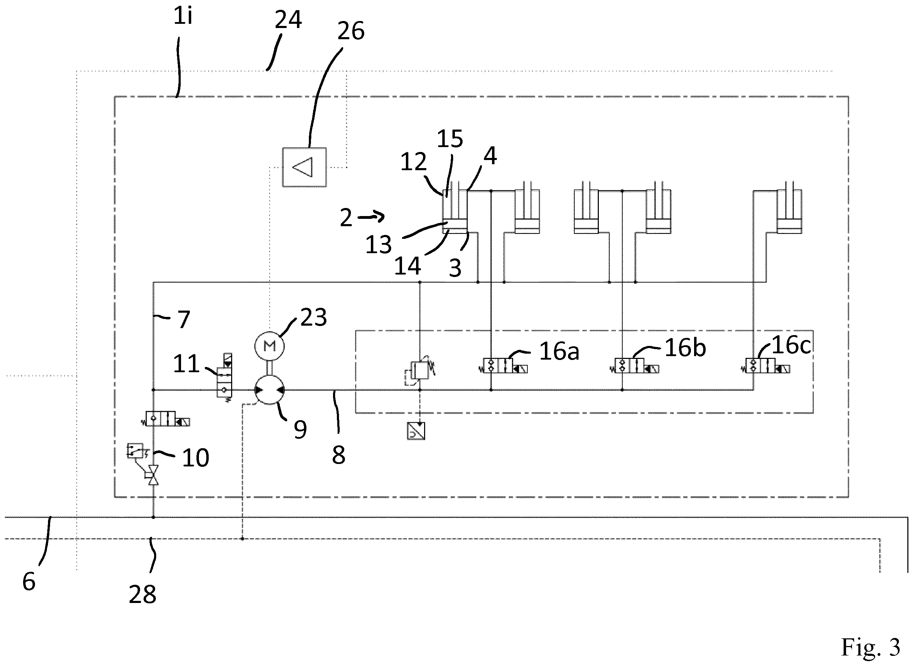

Das in den Figuren dargestellte hydraulische System umfasst eine Zentraleinheit 5, aus der eine Ringleitung 6 heraus und wieder hineinführt. Das hydraulische System umfasst zudem eine erste hydraulische Einheit 1i und eine zweite hydraulische Einheit lii, die über jeweils eine Verbindungsleitung 10 an die Ringleitung 6 angeschlossen sind. Darüber hinaus umfasst das hydraulische System ein Stromversorgungsnetz 24 mit einem zentralen Wechselrichter 25 in der Zentraleinheit 5 und eine Leckageleitung 28, über die die Leckageanschlüsse der Pumpen der hydraulischen Einheiten mit der Zentraleinheit 5 verbunden werden können. Die Zentraleinheit 5 ist in Figur 2 im Detail dargestellt, während die erste hydraulische Einheit 1i in Figur 3 im Detail dargestellt ist.

Die Zentraleinheit 5 umfasst einen Hydraulikfluidtank 17, in der die Ringleitung 6 mit zwei Enden endet. An den Enden der Ringleitung 6 sind zwei Hauptpumpen 18a und 18b angeordnet, die jeweils über einen elektrischen Motor 23 antreibbar sind. Dem jeweiligen Ende der Ringleitung 6 ist zudem jeweils ein Druckspeicher 27a und 27b zugeordnet. Die Zentraleinheit umfasst zudem eine Zirkulationsvorrichtung 19 mit zwei Zirkulationspumpen 20a, 20b, die von einem gemeinsamen Motor 23 angetrieben werden können. Die Zirkulationspumpen 20a, 20b sind an ein jeweiliges Ende der Ringleitung 6 angeschlossen, wobei die Zirkulationspumpe 20a aus dem Hydraulikfluidtank 17 heraus fördert, während die Zirkulationspumpe 20b über eine Filtereinheit 21 und eine Kühleinheit 22 in Strömungsverbindung mit dem Hydraulikfluidtank 17 ist. An der von der Zirkulationspumpe 20b zu der Filtereinheit 21 führenden Leitung ist auch die Leckageleitung 28 angeschlossen. Die Motoren 23 sind jeweils über einen Wechselrichter 26 an das Stromversorgungsnetz 24 angeschlossen.

Die in Figur 3 dargestellte hydraulische Einheit 1i ist über eine Verbindungsleitung 10 an die Ringleitung 6 angeschlossen. Die Verbindungsleitung 10 teilt sich in eine erste Leitung 7 und eine zweite Leitung 8 auf. Die erste Leitung 7 ist über Zwischenleitungen jeweils an einen ersten Hydraulikanschluss 3 eines hydraulischen Verbrauchers 2 angeschlossen, während die zweite Leitung 8 über Zwischenleitungen an einen zweiten Hydraulikanschluss 4 der hydraulischen Verbraucher 2 angeschlossen ist. In der zweiten Leitung 8 ist eine mittels eines Motors 23 antreibbare Hilfspumpe 9 angeordnet, wobei zwischen der Verbindungsleitung 10 und der Hilfspumpe 9 ein Steuerventil 11 angeordnet ist. Die hydraulischen Verbraucher 2 sind als Arbeitszylinder 12 mit darin angeordnetem Arbeitskolben 13 ausgebildet, wobei der Arbeitskolben 13 den Arbeitszylinder 12 in einen Arbeitszylinderkolbenraum 14 und einen Arbeitszylinderstangenraum 15 teilt. In der Zwischenleitung zwischen dem zweiten Hydraulikanschluss 4 und der zweiten Leitung 8 sind jeweils Steuerventile 16a, 16b, 16c angeordnet.

Wenn das in der Verbindungsleitung 10 angeordnete Schaltventil geöffnet ist, liegt der in der Ringleitung 6 vorliegende Hydraulikdruck an dem ersten Hydraulikanschluss 3 und damit in den Arbeitszylinderkolbenraum 14 an. Wird nun das Steuerventil 16a geöffnet, so wird die Kolbenstange aus dem Arbeitszylinder 12 herausgeschoben, wobei das aus dem Arbeitszylinderstangenraum 15 verdrängte Hydraulikfluid über die Hilfspumpe 9 fließt, wodurch der Motor 23 als Generator angetrieben wird. Da das aus dem Arbeitszylinderstangenraum 15 verdrängte Hydraulikvolumen nach Durchgang durch die Hilfspumpe 9 in die erste Leitung 7 fließen kann, muss durch die Verbindungsleitung 10 nur das Differenzvolumen zwischen dem im Arbeitszylinderkolbenraum 14 benötigten Volumen und dem aus dem Arbeitszylinderstangenraum 15 ausfließenden Volumen fließen. Um die Kolbenstange in den Arbeitszylinder 12 zurückzufahren, wird die Pumpe 9 mittels des Motors 23 bei geöffneten Ventilen so betrieben, dass das Hydraulikfluid in dem Arbeitszylinderstangenraum 15 gepumpt wird, wodurch das Hydraulikfluid aus dem Arbeitszylinderkolbenraum 14 verdrängt wird. Da das entsprechende Volumen im Arbeitszylinderkolbenraum 14 größer ist als das in den Arbeitszylinderstangenraum 15 gepumpte Volumen fließt Hydraulikfluid durch die Verbindungsleitung 10 in die Ringleitung 6.

Dies bedeutet aber auch, dass die Hauptpumpen 18a beziehungsweise 18b der Zentraleinheit 5 lediglich das Differenzvolumen fördern müssen. Somit kann zum einen die Ringleitung 6 in ihrer Dimensionierung kleiner als bei üblichen Systemen ausgeführt sein und zum anderen kann die Leistung der Hauptpumpen 18a, 18b geringer ausgelegt sein. Zudem kann das von der ersten hydraulischen Einheit 1i in bestimmten Verfahrensstadien eingespeiste Hydraulikfluid beispielsweise das Hydraulikfluid kompensieren, das parallel in die zweite hydraulische Einheit 1ii einzuspeisen ist. Insofern kann es auch vorkommen, dass das Hydraulikfluid in der Ringleitung 6 hin und herfließt, sodass die Hauptpumpen 18a, 18b hauptsächlich zur Druckbeaufschlagung und zur Förderung eines relativ geringen Hydraulikvolumens vorgesehen sind.

Damit aber sichergestellt wird, dass das Hydraulikfluid in der Ringleitung 6 zur Reinigung und Kühlung in die Zentraleinheit 5 gefördert wird, ist die Zirkulationsvorrichtung 19 vorgesehen, mittels derer das Hydraulikfluid fortwährend durch die Filtereinheit 21 und die Kühleinheit 22 gefördert wird. Die Zirkulationspumpe 20b würde also beim Entspannen des zirkulierenden Fluids Energie zurückgewinnen und damit die andere Zirkulationspumpe 20a antreiben, so dass der der Zirkulationsvorrichtung 19 zugeordnete elektrische Motor 23 nur die Verluste ausgleichen muss.

Sofern das Stromversorgungsnetz 24 nur einen zentralen Gleichrichter 25 aufweist, muss dieser nur jeweils die aktuell von dem gesamten System benötigte Energie aus dem übergeordneten Stromversorgungsnetz in Gleichstrom umwandeln, während beim Betreiben der Motoren 23 als Generator die jeweiligen Wechselrichter 26 die von den Motoren 23 erzeugte elektrische Energie ebenfalls in Gleichstrom umwandeln und somit anderen Motoren 23 zum Antrieb zur Verfügung steht. Sollte es vorkommen, dass von den Wechselrichtern 26 mehr Energie in Gleichstrom umgewandelt wird als von dem gesamten System benötigt, so würde der zentrale Gleichrichter 25 Strom in das übergeordnete Netz einspeisen.

### Bezugszeichenliste

- 1i, ii: hydraulische Einheit
- 2: hydraulischer Verbraucher
- 3: erster Hydraulikanschluss
- 4: zweiter Hydraulikanschluss
- 5: Zentraleinheit
- 6: Ringleitung
- 7: erste Leitung
- 8: zweite Leitung
- 9: Hilfspumpe
- 10: Verbindungsleitung
- 11: Steuerventil
- 12: Arbeitszylinder
- 13: Arbeitskolben
- 14: Arbeitszylinderkolbenraum
- 15: Arbeitszylinderstangenraum
- 16a, b, c: Steuerventil
- 17: Hydraulikfluidtank
- 18a, b: Hauptpumpe
- 19: Zirkulationsvorrichtung
- 20a, b: Zirkulationspumpe
- 21: Filtereinheit
- 22: Kühleinheit
- 23: elektrischer Motor
- 24: Stromversorgungsnetz
- 25: zentraler Gleichrichter
- 26: Wechselrichter
- 27a, b: Druckspeicher
- 28: Leckageleitung

## Patentansprüche

1. Hydraulisches System, umfassend
- eine Mehrzahl von hydraulischen Einheiten (1), die jeweils mindestens einen hydraulischen Verbraucher (2) jeweils mit einem ersten Hydraulikanschluss (3) und einem zweiten Hydraulikanschluss (4) aufweisen,
- eine Versorgungsleitung, an die die hydraulischen Einheiten (1) angeschlossen sind, und
- eine Zentraleinheit (5) zur Bereitstellung und Druckbeaufschlagung des in der Versorgungsleitung geführten Hydraulikfluids,
**dadurch gekennzeichnet,**
- **dass** die Versorgungsleitung als eine in und aus der Zentraleinheit (5) führende Ringleitung (6) ausgebildet ist,
- **dass** die hydraulischen Einheiten (1) jeweils eine erste Leitung (7) und eine zweite Leitung (8) aufweisen, wobei die Ringleitung (6) über die erste Leitung (7) mit dem ersten Hydraulikanschluss (3) des mindestens eines hydraulischen Verbrauchers (2) der hydraulischen Einheit (1) verbunden ist und über die zweite Leitung (8) mit dem zweiten Hydraulikanschluss (4) des mindestens einen hydraulischen Verbrauchers (2) der hydraulischen Einheit (1) verbunden ist, und
- **dass** die hydraulischen Einheiten (1) jeweils eine antreibbare Hilfspumpe (9) aufweisen, die in der zweiten Leitung (8) der jeweiligen hydraulischen Einheit (1) angeordnet ist.

2. Hydraulisches System nach Anspruch 1, wobei für jede hydraulische Einheit (1) jeweils genau eine Verbindungsleitung (10) vorgesehen ist, über die die jeweilige hydraulische Einheit (1) an die Ringleitung (6) angeschlossen ist, wobei die erste Leitung (7) und die zweite Leitung (8) über die Verbindungsleitung (10) mit der Ringleitung (6) verbunden sind.

3. Hydraulisches System nach Anspruch 1 oder 2, wobei in der zweiten Leitung (8) zwischen der Ringleitung (6) und der Hilfspumpe (9) ein ansteuerbares Steuerventil (11) angeordnet ist.

4. Hydraulisches System nach einem der vorhergehenden Ansprüche, wobei der mindestens eine hydraulische Verbraucher (2) einen Arbeitszylinder (12) und einen in dem Arbeitszylinder (12) angeordneten Arbeitskolben (13) umfasst, der den Arbeitszylinder (12) in einen Arbeitszylinderkolbenraum (14) und einen Arbeitszylinderstangenraum (15) teilt, wobei insbesondere die erste Leitung (7) mit dem Arbeitszylinderkolbenraum (14) verbunden ist und die zweite Leitung (8) mit dem Arbeitszylinderstangenraum (15) verbunden ist.

5. Hydraulisches System nach einem der vorhergehenden Ansprüche, wobei jede hydraulische Einheit (1) eine Mehrzahl von hydraulischen Verbrauchern (2) aufweist, wobei zwischen dem zweiten Hydraulikanschluss (4) jedes Verbrauchers (2) und der zweiten Leitung (8) ein ansteuerbares Steuerventil (16) angeordnet ist.

6. Hydraulisches System nach einem der vorhergehenden Ansprüche, wobei die Zentraleinheit (5) einen Hydraulikfluidtank (17) und zwei Hauptpumpen (18a, b) zur Förderung und Druckbeaufschlagung des für die Betätigung der hydraulischen Verbraucher (2) benötigten Hydraulikfluids aufweist, wobei die Hauptpumpen (18a, b) jeweils zwischen einem Ende der Ringleitung (6) und dem Hydraulikfluidtank (17) angeordnet sind.

7. Hydraulisches System nach einem der vorhergehenden Ansprüche, wobei die Zentraleinheit (5) eine Zirkulationsvorrichtung (19) umfasst, mittels derer das Hydraulikfluid in der Ringleitung (6) zirkulierbar ist.

8. Hydraulisches System nach Anspruch 7, wobei die Zirkulationsvorrichtung (19) zwei Zirkulationspumpen (20a, b) umfasst, wobei die eine Zirkulationspumpe (20a) vor dem ersten Ende der Ringleitung (6) an die Ringleitung (6) angeschlossen ist und die zweite Zirkulationspumpe (20b) vor dem zweiten Ende der Ringleitung (6) an die Ringleitung (6) angeschlossen ist.

9. Hydraulisches System nach Anspruch 7 oder 8, wobei die Zentraleinheit (5) eine Filtereinheit (21) und/oder eine Kühleinheit (22) umfasst, die der Zirkulationsvorrichtung (19) für das mittels der Zirkulationsvorrichtung (19) geförderte Hydraulikfluid zugeordnet sind.

10. Hydraulisches System nach einem der vorhergehenden Ansprüche, wobei die Pumpen (9, 18, 20) des Systems jeweils mit einem elektrischen Motor (23) gekoppelt sind, der als Antrieb und als Generator fungieren kann.

11. Hydraulisches System nach Anspruch 10, welches ein Stromversorgungsnetz (24) umfasst, in dem ein zentraler Gleichrichter (25) vorgesehen ist, mit dem Wechselstrom eines übergeordneten Netzes in Gleichstrom umwandelbar ist, und in dem jedem elektrischen Motor (23) ein Wechselrichter (26) zugeordnet ist, mit dem Gleichstrom in den von dem jeweiligen Motor (23) benötigten Wechselstrom umwandelbar ist.

## Claims

1. A hydraulic system, comprising
- a plurality of hydraulic units (1), which each comprise at least one hydraulic consumer (2) each with a first hydraulic connection (3) and a second hydraulic connection (4),
- a supply line, to which the hydraulic units (1) are connected, and
- a central unit (5) for providing and pressurising the hydraulic fluid conveyed in the supply line,
**characterised in that**
- the supply line is constituted as a ring line (6) leading into and out of the central unit (5),
- the hydraulic units (1) each comprise a first line (7) and a second line (8), wherein the ring line (6) is connected via the first line (7) to the first hydraulic connection (3) of the at least one hydraulic consumer (2) of the hydraulic unit (1) and is connected via the second line (8) to the second hydraulic connection (4) of the at least one hydraulic consumer (2) of the hydraulic unit (1), and
- the hydraulic units (1) each comprise a driveable auxiliary pump (9), which is arranged in the second line (8) of the respective hydraulic unit (1).

2. The hydraulic system according to claim 1, wherein in each case for each hydraulic unit (1) precisely one connecting line (10) is provided, via which the respective hydraulic unit (1) is connected to the ring line (6), wherein the first line (7) and the second line (8) are connected via the connecting line (10) to the ring line (6).

3. The hydraulic system according to claim 1 or 2, wherein an actuatable control valve (11) is arranged in a second line (8) between the ring line (6) and the auxiliary pump (9).

4. The hydraulic system according to any one of the preceding claims, wherein the at least one hydraulic consumer (2) comprises a working cylinder (12) and a working piston (13) arranged in the working cylinder (12), which divides the working cylinder (12) into a working cylinder piston space (14) and a working cylinder rod space (15), wherein in particular the first line (7) is connected to the working cylinder piston space (14) and the second line (8) is connected to the working cylinder rod space (15).

5. The hydraulic system according to any one of the preceding claims, wherein each hydraulic unit (1) comprises a plurality of hydraulic consumers (2), wherein an actuatable control valve (16) is arranged between the second hydraulic connection (4) of each consumer (2) and the second line (8).

6. The hydraulic system according to any one of the preceding claims, wherein the central unit (5) comprises a hydraulic fluid tank (17) and two main pumps (18a, b) for conveying and pressurising the hydraulic fluid required for the actuation of the hydraulic consumer (2), wherein the main pumps (18a, b) are each arranged between an end of the ring line (6) and the hydraulic fluid tank (17).

7. The hydraulic system according to any one of the preceding claims, wherein the central unit (5) comprises a circulation device (19), by means of which the hydraulic fluid can be circulated in the ring line (6).

8. The hydraulic system according to claim 7, wherein the circulation device (19) comprises two circulation pumps (20a, b), wherein the one circulation pump (20a) is connected to the ring line (6) ahead of the first end of the ring line (6) and the second circulation pump (20b) is connected to the ring line (6) ahead of the second end of the ring line (6).

9. The hydraulic system according to claim 7 or 8, wherein the central unit (5) comprises a filter unit (21) and/or a cooling unit (22), which are assigned to the circulation device (19) for the hydraulic fluid conveyed by means of the circulation device (19).

10. The hydraulic system according to any one of the preceding claims, wherein the pumps (9, 18, 20) of the system are each coupled to an electric motor (23), which can function as a drive and as a generator.

11. The hydraulic system according to claim 10, which comprises a power supply network (24), in which a central rectifier (25) is provided, with which alternating current of a higher-order network can be converted into direct current, and in which a rectifier (26) is assigned to each electric motor (23), with which direct current can be converted into the alternating current required by the respective motor (23).

## Revendications

1. Système hydraulique, comprenant :
- une pluralité d'unités hydrauliques (1) qui présentent respectivement au moins un consommateur hydraulique (2), respectivement avec un premier raccordement hydraulique (3) et un second raccordement hydraulique (4),
- une ligne d'alimentation à laquelle les unités hydrauliques (1) sont raccordées, et
- une unité centrale (5) pour fournir et alimenter en pression le fluide hydraulique dirigé dans la ligne d'alimentation,
**caractérisé en ce que**
- la ligne d'alimentation est conçue en tant qu'une ligne annulaire (6) conduisant dans et hors de l'unité centrale (5),
- que les lignes hydrauliques (1) présentent respectivement une première ligne (7) et une deuxième ligne (8), dans lequel la ligne annulaire (6) est reliée au premier raccordement hydraulique (3) de l'au moins un consommateur hydraulique (2) de l'unité hydraulique (1) par le biais de la première ligne (7) et est raccordée au deuxième raccordement hydraulique (4) de l'au moins un consommateur hydraulique (2) de l'unité hydraulique (1) par le biais de la deuxième ligne (8), et
- que les unités hydrauliques (1) présentent respectivement une pompe auxiliaire (9) pouvant être entraînée qui est disposée dans la deuxième ligne (8) de l'unité hydraulique (1) respective.

2. Système hydraulique selon la revendication 1, dans lequel pour chaque unité hydraulique (1), une ligne de raccordement (10) respective est prévue précisément, par laquelle l'unité hydraulique (1) respective est raccordée à la ligne annulaire (6), dans lequel la première ligne (7) et la deuxième ligne (8) sont raccordées à la ligne annulaire (6) par le biais de la ligne de raccordement (10).

3. Système hydraulique selon la revendication 1 ou 2, dans lequel un clapet de commande (11) pouvant être commandé est disposé dans la deuxième ligne (8) entre la ligne annulaire (6) et la pompe auxiliaire (9).

4. Système hydraulique selon l'une des revendications précédentes, dans lequel l'au moins un consommateur hydraulique (2) comprend un cylindre de travail (12) et un piston de travail (13) disposé dans le cylindre de travail (12), qui divise le cylindre de travail (12) en un espace de piston de cylindre de travail (14) et un espace de tige de cylindre de travail (15), dans lequel en particulier la première conduite (7) est raccordée à l'espace de piston de cylindre de travail (14) et la deuxième ligne (8) est raccordée à l'espace de tige de cylindre de travail (15).

5. Système hydraulique selon l'une des revendications précédentes, dans lequel chaque unité hydraulique (1) présente une pluralité de consommateurs hydrauliques, (2) dans lequel un clapet de commande (16) pouvant être commandé est disposé entre le deuxième raccordement hydraulique (4) de chaque consommateur (2) et la deuxième ligne (8).

6. Système hydraulique selon l'une des revendications précédentes, dans lequel l'unité centrale (5) présente un réservoir de fluide hydraulique (17) et deux pompes principales (18a, b) pour transporter et alimenter en pression le fluide hydraulique nécessaire à l'actionnement des consommateurs hydrauliques (2), dans lequel les pompes principales (18a, b) sont disposées respectivement entre une extrémité de la ligne annulaire (6) et le réservoir de fluide hydraulique (17).

7. Système hydraulique selon l'une des revendications précédentes, dans lequel l'unité centrale (5) comprend un dispositif de circulation (19) au moyen duquel le fluide hydraulique peut circuler dans la ligne annulaire (6).

8. Système hydraulique selon la revendication 7, dans lequel le dispositif de circulation (19) comprend deux pompes de circulation (20a, b), dans lequel l'une pompe de circulation (20a) est raccordée à la ligne annulaire (6) avant la première extrémité de la ligne annulaire (6) et la deuxième pompe de circulation (20b) est raccordée à la ligne annulaire (6) avant la deuxième extrémité de la ligne annulaire (6).

9. Système hydraulique selon la revendication 7 ou 8, dans lequel l'unité centrale (5) comprend une unité filtrante (21) et/ou une unité de refroidissement (22), qui sont attribuées au dispositif de circulation (19) pour le fluide hydraulique transporté au moyen du dispositif de circulation (19).

10. Système hydraulique selon l'une des revendications précédentes, **caractérisé en ce que** les pompes (9, 18, 20) du système sont respectivement couplées à un moteur électrique (23) qui peut servir d'entraînement et de générateur.

11. Système hydraulique selon la revendication 10 qui comprend un réseau d'alimentation électrique (24) dans lequel un redresseur central (25) est prévu avec lequel du courant alternatif d'un réseau maître peut être converti en courant continu et dans lequel un onduleur (26) est attribué à chaque moteur électrique (23) avec lequel du courant continu peut être converti en le courant alternatif nécessaire au moteur (23) respectif.
